# EUROPEAN PATENT SPECIFICATION

(11) **EP 1 535 960 B1**
(45) Date of publication and mention of the grant of the patent: **24.10.2007**
(21) Application number: 04028007.5
(22) Date of filing: 25.11.2004
(51) Int. Cl.: C08L 13/00, C08L 33/06, C08L 33/18

(54) **Oil resistant and weather resistant rubber composition and molded product using the same**
Öl- und wetterbeständige Kautschukzusammensetzung und daraus geformte Produkte
Composition de caoutchouc résistant à l'huile et aux intempéries et produit moulé avec la même composition

(30) Priority: 28.11.2003 JP 2003400189
(43) Date of publication of application: 01.06.2005
(73) Proprietor: JSR Corporation, Tokyo (JP)
(72) Inventor: Sawada, Yukihiro, JSR Corporation, Tokyo (JP); Toyoshima, Tsukasa, JSR Corporation, Tokyo (JP); Tsuneyoshi, Minoru, JSR Corporation, Tokyo (JP); Hasegawa, Kenji, JSR Corporation, Tokyo (JP)
(74) Representative: TBK-Patent

(56) References cited:
- WO-A-03/055925
- US-A- 4 912 186
- US-A- 5 612 418

## Description

### FIELD OF THE INVENTION

The present invention relates to an oil resistant and weather resistant rubber composition and a molded product using the same. More particularly, the present invention relates to an oil resistant and weather resistant rubber composition which can afford a molded product that is excellent in fuel oil resistance as well as excellent in tensile strength, and which comprises an acrylic-based rubber that is crosslinkable with sulfur, an organic peroxide, a metal salt of an aromatic or aliphatic carboxylic acid or an acid anhydride thereof; and to a molded product such as a hose and a seal using the same.

### DESCRIPTION OF THE RELATED ART

A rubber product which comprises an acrylonitrile-butadiene copolymer rubber conventionally are excellent in oil resistance, irrespective of being inferior in ozone resistance, therefore, a rubber composition prepared by blending with polyvinyl chloride has been used. Recent years, nonchlorination has been advanced taking environmental problems into consideration, however, a rubber composition prepared by blending an acrylic acid ester-based copolymer rubber which is excellent in ozone resistance and is crosslinkable with sulfur is disclosed (JP-A-S50-25656).

EP1469018 discloses an oil and weather resistant rubber composition comprising (A) an epoxy group containing acrylic rubber and (B) a nitrile rubber.

US5612418 discloses an oil and heat resistant rubber composition comprising (A) an acrylic rubber and (B) a partially hydrogenated nitrile rubber.

US4912186 discloses an oil and weather resistant rubber composition comprising (A) an acrylic rubber and (B) a nitrile rubber.

The only way to provide a rubber product that is excellent in ozone resistance using such an acrylic acid ester-based copolymer rubber is to increase the proportion content in the composition. Consequently, problems have occurred such as reduction of strength, deterioration of low-temperature capabilities and fuel oil resistance against gasoline and the like, which are disadvantages of the acrylic acid ester-based copolymer rubber, leading to lack in practicality. Further, in the case a method of using an antiaging agent for the purpose of improving the ozone resistance is conducted, an event such as permeation of the fuel oil from a surface of the rubber product to extract the antiaging agent may be caused, and as a result, ozone resistance may not be exhibited.

### SUMMARY OF THE INVENTION

An object of the present invention is to provide an oil resistant and weather resistant rubber composition which leads to a molded product (rubber product) that has a sufficiently high strength and low compression set, and is excellent in ozone resistance; and a molded product such as a hose and a seal using the same.

The present invention is described as follows.
1. An oil resistant and weather resistant rubber composition which comprises (A) an epoxy group-containing acrylic-based rubber having an epoxy group in an amount from 0.01 to 1.5 mmol/g, and (B) a carboxyl group-containing unsaturated nitrile-conjugated diene-based copolymer having a carboxyl group in an amount from 0.02 to 2.5 mmol/g.
2. The oil resistant and weather resistant rubber composition according to 1 above, wherein the epoxy group-containing acrylic-based rubber (A) comprises a structural unit (a1) derived from at least one monomer selected from the group consisting of an acrylic acid alkyl ester and an acrylic acid alkoxyalkyl ester in an amount from 20 to 99.8% by weight, a structural unit (a2) which is derived from an unsaturated epoxy monomer and has an epoxy group in an amount from 0.2 to 20% by weight, a structural unit (a3) derived from an unsaturated nitrile monomer in an amount from 0 to 60% by weight, and a structural unit (a4) derived from other monomer which can be copolymerized with the monomer in an amount from 0 to 20% by weight based on 100% by weight of total of the structural units (a1), (a2), (a3) and (a4).
3. The oil resistant and weather resistant rubber composition according to 2 above, wherein the structural unit (a4) is a structural unit derived from at least one monomer selected from the group consisting of a non-conjugated cyclic polyene and a compound represented by the following general formula (1) and is comprised in an amount from 0.1 to 20% by weight, and wherein X¹ represents hydrogen atom or methyl group, and n is an integer number from 0 to 10. 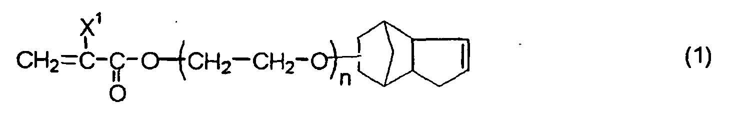
4. The oil resistant and weather resistant rubber composition according to 2 or 3 above, wherein Mooney viscosity [ML₁₊₄ (100°C)]of the epoxy group-containing acrylic-based rubber (A) is in the range between 10 and 200.
5. The oil resistant and weather resistant rubber composition according to any one of 1 to 4 above, wherein the carboxyl group-containing unsaturated nitrile-conjugated diene-based copolymer (B) comprises a structural unit (b1) derived from an unsaturated nitrile monomer in an amount from 15 to 60% by weight, a structural unit (b2) derived from a conjugated diene-based monomer in an amount from 39.8 to 65% by weight, a structural unit (b3) derived from an unsaturated carboxylic acid in an amount from 0.2 to 20% by weight, and a structural unit (b4) derived from other monomer which can be copolymerized with the monomer in an amount from 0 to 20% by weight based on 100% by weight of total of the structural units (b1), (b2), (b3) and (b4).
6. The oil resistant and weather resistant rubber composition according to 5 above, wherein Mooney viscosity [ML₁₊₄ (100°C)] of the unsaturated nitrile-conjugated diene-based copolymer (B) is in the range between 20 and 200.
7. The oil resistant and weather resistant rubber composition according to any one of 1 to 6 above, wherein contents of the epoxy group-containing acrylic-based rubber (A) and the unsaturated nitrile-conjugated diene-based copolymer (B) are from 30 to 60% by weight and from 40 to 70% by weight respectively based on 100% by weight of total of the rubber (A) and the copolymer (B).
8. The oil resistant and weather resistant rubber composition according to any one of 1 to 7 above, further comprising a reinforcing agent, a plasticizer and a crosslinking agent.
9. The oil resistant and weather resistant rubber composition according to 8 above, further comprising at least one crosslinking agent selected from the group consisting of an acid anhydride and a carboxylate.
10. A molded product formed using the oil resistant and weather resistant rubber composition according to any one of 1 to 9 above.
11. The molded product according to 10 above, wherein the molded product is a hose or a seal.

Since the oil resistant and weather resistant rubber composition of the present invention comprises (A) an epoxy group-containing acrylic-based rubber having a predetermined epoxy group concentration and (B) a carboxyl group-containing unsaturated nitrile-conjugated diene-based copolymer having a predetermined carboxyl group concentration, and is crosslinkable with sulfur, an organic peroxide, a metal salt of an aromatic or aliphatic carboxylic acid, an acid anhydride thereof or the like, a molded product which is excellent in fuel oil resistance, has a sufficiently high strength and hardness as well as low compression set, and further, is excellent in ozone resistance can be readily obtained.

Examples of the molded product include a hose such as an oil cooler hose, an air duct hose, a power steering hose, a control hose, an inter cooler hose, a torcon hose, an oil return hose and a heat resistant hose; tubes such as a bicycle tube, a rubber duct and a rubber tubing for use in physical and chemical science; a seal such as a bearing seal, a valve stem seal and various kinds of oil seals; an O-ring; a gland packing; a gasket; a diaphragm; a rubber plate; a belt; an oil level gauge; a hose masking; a cover such as a heat insulator for ductwork; a roll and the like. Particularly, a hose and a seal are suitable.

### DETAILED DESCRIPTION OF THE INVENTION

The present invention is explained in detail below.

### 1. Oil resistant and weather resistant rubber composition

The oil resistant and weather resistant rubber composition of the present invention comprises (A) an epoxy group-containing acrylic-based rubber having an epoxy group in an amount from 0.01 to 1.5 mmol/g, and (B) a carboxyl group-containing unsaturated nitrile-conjugated diene-based copolymer having a carboxyl group in an amount from 0.02 to 2.5 mmol/g.

### 1-1. Epoxy group-containing acrylic-based rubber (A)

The epoxy group-containing acrylic-based rubber (A) is not particularly limited as long as it has at least one epoxy group in an amount from 0.01 to 1.5 mmol/g in one molecule. The content of this epoxy group is preferably from 0.02 to 1 mmol/g, and more preferably from 0.02 to 0.6 mmol/g. When the content is less than 0.01 mmol/g, the ozone resistance of a molded product obtained using the oil resistant and weather resistant rubber composition of the present invention is liable to be insufficient. On the other hand, when the content is exceeding 1.5 mmol/g, the compression set may be deteriorated.

The epoxy group-containing acrylic-based rubber (A) may be an acrylic-based rubber obtained by polymerization or the like using monomers which include an acrylic-based monomer such as an acrylic acid alkyl ester and an acrylic acid alkoxyalkyl ester, and a monomer having an epoxy group, to have structural units that are derived from each monomer and to have an epoxy group; or may be an acrylic-based rubber obtained by polymerization or the like using monomers which include an acrylic-based monomer having an epoxy group, to have structural units that are derived from each monomer and to have an epoxy group.

The epoxy group-containing acrylic-based rubber (A) according to the present invention is preferably an epoxy group-containing acrylic-based rubber which comprises a structural unit (a1) derived from at least one monomer selected from the group consisting of an acrylic acid alkyl ester and an acrylic acid alkoxyalkyl ester in an amount from 20 to 99.8% by weight, a structural unit (a2) which is derived from an unsaturated epoxy monomer and has an epoxy group in an amount from 0.2 to 20% by weight, a structural unit (a3) derived from an unsaturated nitrile monomer in an amount from 0 to 60% by weight, and a structural unit (a4) derived from other monomer which can be copolymerized with the above monomer in an amount from 0 to 20% by weight based on 100% by weight of total of the structural units (a1), (a2), (a3) and (a4)

Examples of the acrylic acid alkyl ester include methyl acrylate, ethyl acrylate, n-propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, n-decyl acrylate, n-dodecyl acrylate, n-octadecyl acrylate and the like. These compounds may be used alone or in combination of two or more.

Examples of the acrylic acid alkoxyalkyl ester include 2-methoxyethyl acrylate, 2-ethoxyethyl acrylate, 2-(n-propoxy)ethyl acrylate, 2-(n-butoxy)ethyl acrylate, 3-methoxypropyl acrylate, 3-ethoxypropyl acrylate, 2-(n-propoxy)propyl acrylate, 2-(n-butoxy)propyl acrylate and the like. These compounds may be used alone or in combination of two or more.

The structural unit (a1) that constitutes the epoxy-containing acrylic-based rubber (A) is derived from at least one monomer selected from the group consisting of the acrylic acid alkyl ester and the acrylic acid alkoxyalkyl ester, and the content thereof is from 20 to 99.8% by weight, more preferably from 25 to 60% by weight, and still more preferably from 30 to 55% by weight based on 100% by weight of total of the structural units. When the content of the structural unit (a1) is less than 20% by weight, the hardness of the molded product may be so high that characteristics of a rubber are liable to be lost. On the other hand, when the content is exceeding 99.8% by weight, the fuel oil resistance is liable to be inferior.

Examples of the unsaturated epoxy monomer include glycidyl (meth)acrylate, 3,4-oxycyclohexyl (meth)acrylate, vinyl glycidyl ether, allyl glycidyl ether, methacryl glycidyl ether and the like. These compounds may be used alone or in combination of two or more.

The structural unit (a2) that constitutes the epoxy-containing acrylic-based rubber (A) is derived from the unsaturated epoxy monomer and has an epoxy group, and the content thereof is from 0.2 to 20% by weight, more preferably from 0.4 to 15% by weight, and still more preferably from 0.5 to 10% by weight based on 100% by weight of total of the structural units. When the content of the structural unit (a2) is less than 0.2% by weight, the ozone resistance of the molded product is liable to be insufficient. On the other hand, when the content is exceeding 20% by weight, the compression set may be deteriorated. The content of the epoxy group in the structural unit (a2) is not particularly limited.

When the epoxy-containing acrylic-based rubber (A) is consisted of the structural units (a1) and (a2), a combination of preferable proportion content thereof, (a1)/(a2), is from 80 to 99.8% by weight / from 0.2 to 20% by weight, and more preferably from 85 to 99.6% by weight / from 0.4 to 15% by weight based on 100% by weight of total of these structural units.

The epoxy-containing acrylic-based rubber (A) may comprise a structural unit (a3) derived from an unsaturated nitrile monomer that can be copolymerized with the acrylic acid alkyl ester and acrylic acid alkoxyalkyl ester, in addition to the structural units (a1) and (a2).

Examples of the unsaturated nitrile monomer include acrylonitrile, methacrylonitrile, ethacrylonitrile, α-chloroacrylonitrile, α-fluoroacrylonitrile and the like. These compounds may be used alone or in combination of two or more.

The structural unit (a3) that constitutes the epoxy-containing acrylic-based rubber (A) is derived from the unsaturated nitrile monomer, and the content thereof is preferably 1 to 60% by weight, more preferably 15 to 40% by weight, and still more preferably 20 to 30% by weight based on 100% by weight of total of the structural units. When the content of the structural unit (a2) is exceeding 60% by weight, the hardness of the molded product may be so high that characteristics of a rubber are liable to be lost.

When the epoxy-containing acrylic-based rubber (A) is consisted of the structural units (a1), (a2) and (a3), a combination of proportion content thereof, (a1)/(a2)/(a3), is from 20 to 99.8% by weight / from 0.2 to 20% by weight / from 0 to 60% by weight, more preferably from 40 to 84.6% by weight / from 0.4 to 20% by weight / from 15 to 40% by weight, and still more preferably from 60 to 79.2% by weight / from 0.8 to 10% by weight/20 to 30% by weight based on 100% by weight of total of the structural units.

The epoxy-containing acrylic-based rubber (A) may further comprise a structural unit (a4) derived from other monomer that can be copolymerized with the acrylic acid alkyl ester, the acrylic acid alkoxyalkyl ester, the unsaturated nitrile monomer and unsaturated epoxy monomer, in addition to the structural units (a1), (a2) and (a3).

Examples of the other monomer include a non-conjugated cyclic polyene; a compound represented by the general formula (1) below; an aromatic vinyl-based monomer; an amide compound, a (meth)acrylic acid cycloalkyl ester; a (meth)acrylic acid ester of an alicyclic or an aromatic alcohol; a (meth)acrylic acid alkyl ester having a functional group such as an amino group, a cyano group and a hydroxyl group; an ester of an unsaturated carboxylic acid with a lower saturated alcohol; vinyl acetate; vinyl chloride; vinylidene chloride; and the like. These compounds may be used alone or in combination of two or more. 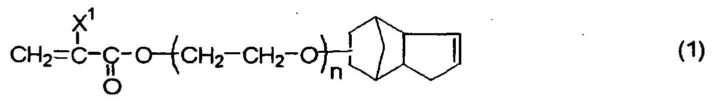 (wherein X¹ represents hydrogen atom or methyl group; and n is an integer number of from 0 to 10.)

Examples of the non-conjugated cyclic polyene include 5-ethylidene-2-norbornene, dicyclopentadiene, 5-propylidene-2-norbornene, 5-vinyl-2-norbornene, 2,5-norbornadiene, 1,4-cyclohexadiene, 1,4-cyclooctadiene, 1,5-cyclooctadiene, 5-methylene-2-norbornene, 5-vinyl-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, 5-(1,2,3-trimethyl-4-pentenyl)-2-norbornene and the like. These compounds may be used alone or in combination of two or more.

The compound represented by the general formula (1) above is a dihydrodicyclopentadienyl oxyethyl group-containing ester of an unsaturated carboxylic acid, and preferable n in the formula is 1 or 2. The compound represented by the general formula (1) above is synthesized by an esterification reaction of dihydrodicyclopentadienyl oxyethylene or the like with an unsaturated carboxylic acid such as (meth)acrylic acid. Examples of the compound include dihydrodicyclopentadienyl (meth)acrylate, dihydrodicyclopentadienyl oxyethyl (meth)acrylate, dihydrodicyclopentadienyloxy oxydiethyl (meth)acrylate and the like. These compounds may be used alone or in combination of two or more.

Examples of the aromatic vinyl-based monomer include styrene, 2-methylstyrene, 3-methylstyrene, 4-methylstyrene, α-methylstyrene, 2,4-dimethylstyrene, 2,4-diisopropylstyrene, 4-tert-butylstyrene, tert-butoxystyrene, vinyltoluene, vinylnaphthalene, halogenated styrene and the like.

Examples of the amide compound include acrylamide, N-methylolacrylamide, N-(4-anilinophenyl)acrylamide, N-(4-anilinophenyl)methacrylamide and the like.

Examples of the (meth)acrylic acid cycloalkyl ester include cyclohexyl (meth)acrylate and the like.

Examples of the (meth)acrylic acid ester of an aromatic alcohol include benzyl (meth)acrylate and the like.

Examples of the (meth)acrylic acid ester having an amino group include dimethylaminomethyl (meth)acrylate, diethylaminomethyl (meth)acrylate, 2-dimethylaminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate, 3-(di-n-propylamino)propyl (meth)acrylate and the like.

Examples of the alkyl (meth)acrylate ester having a cyano group include cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, 2-ethyl-6-cyanohexyl (meth)acrylate, 8-cyanooctyl (meth)acrylate and the like.

Examples of the (meth)acrylic acid ester having a hydroxyl group include a hydroxyalkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; a mono(meth)acrylic acid ester of a polyalkylene glycol (wherein the unit number of the alkylene glycol is, for example, 2 to 23) such as polyethylene glycol and polypropylene glycol, and the like.

In addition, examples of the unsaturated carboxylic acid for use in the ester of the unsaturated carboxylic acid with the lower saturated alcohol include methacrylic acid, itaconic acid, fumaric acid, maleic acid and the like.

Among the monomers exemplified above as the other monomer, the non-conjugated cyclic polyene and the compound represented by the general formula (1) are particularly preferred in view of crosslinking capabilities.

The structural unit (a4) that constitutes the epoxy-containing acrylic-based rubber (A) is derived from the other monomer exemplified above, and the content thereof is preferably from 0.1 to 20% by weight, more preferably from 0.2 to 15% by weight, and still more preferably from 0.2 to 7% by weight based on 100% by weight of total of the structural units. When the content of the structural unit (a4) is exceeding 20% by weight, the processability during kneading may be inferior.

Mooney viscosity [ML₁₊₄ (100°C)] of the epoxy-containing acrylic-based rubber (A) is in the range between 10 and 200, and preferably between 20 and 100. When the Mooney viscosity is too low, the strength of the molded product is liable to be lowered, while when it is too high in contrast, the processability during kneading may be inferior.

The epoxy-containing acrylic-based rubber (A) can be obtained by copolymerization of the monomer forming the structural units (a1), (a2), (a3) and (a4), preferably, in the presence of a radical polymerization initiator.

Specific examples of the production of the epoxy-containing acrylic-based rubber (A) include a method in which a mixture comprising the above monomer is subjected to copolymerization in the presence of a radical polymerization initiator.

Examples of the radical polymerization initiator include an azo compound such as azobisisobutyronitrile; an organic peroxide such as benzoyl peroxide, lauroyl peroxide, tert-butyl hydroperoxide, cumene hydroperoxide, paramenthane hydroperoxide, di-tert-butyl peroxide and dicumyl peroxide; an inorganic peroxide such as potassium persulfate; a redox catalyst by combining any one of these peroxides and ferrous sulfate, and the like. These radical polymerization initiators may be used alone or in combination of two or more.

An amount of the radical polymerization initiator to be used is usually from 0.001 to 2 parts by weight based on 100 parts by weight of total of the monomers. Process of the polymerization may be any known process such as mass polymerization, solution polymerization, suspension polymerization and emulsion polymerization, and emulsion polymerization is particularly preferred.

Examples of the emulsifying agent used in the emulsion polymerization include an anionic surfactant, a nonionic surfactant, a cationic surfactant, an amphoteric surfactants and the like. A fluorine-based surfactant may be also used. These emulsifying agents may be used alone or in combination of two or more. In general, an anionic surfactant has been commonly used, and for example, a salt of a long chain fatty acid having 10 or more carbon atoms, a salt of a rosin acid and the like may be used. Specific examples include potassium salts and sodium salts of capric acid, lauric acid, myristic acid, palmitic acid, oleic acid, stearic acid, and the like.

A chain transfer agent may be also used for adjusting the molecular weight of the copolymer rubber. Examples of the chain transfer agent include an alkyl mercaptan such as tert-dodecyl mercaptan and n-dodecyl mercaptan; carbon tetrachloride; a thioglycol; diterpene; terpinolene; a γ-terpinene; and the like.

When the epoxy-containing acrylic-based rubber (A) is produced, a monomer, an emulsifying agent, an radical polymerization initiator, an chain transfer agent and the like may be charged into a reaction vessel all at once in the initiation of the polymerization, or they may be supplied to add serially or intermittently during proceeding of the reaction. The polymerization is carried out using a reactor vessel in which oxygen had been eliminated, usually at a polymerization temperature in the range between 0 and 100°C, preferably between 0 and 80°C. In course of the reaction, conditions and the like for the production such as a method of adding the material, a polymerization temperature and a method of stirring may be altered ad libitum. The polymerization system may be either in a continuous system, or in a batch-wise system.

The polymerization time period is approximately in the range between 0.01 and 30 hours, in general. When a predetermined polymerization conversion is reached, the polymerization is terminated by adding a polymerization inhibitor. Examples of the polymerization inhibitor include an amine compound such as hydroxylamine and N,N-diethylhydroxylamine, a quinone compound such as hydroquinone, and the like.

After terminating the polymerization, unreacted monomers are eliminated from the resulting emulsified liquid (latex) by a method such as a steam distillation as needed. Thereafter, a salt such as sodium chloride, calcium chloride and potassium chloride, or an acid such as hydrochloric acid, nitric acid and sulfuric acid is added thereto to allow coagulation of the copolymer rubber, and thus, the objective copolymer rubber can be obtained by washing with water and drying.

### 1-2. Carboxyl group-containing unsaturated nitrile-conjugated diene-based copolymer (B)

In the present invention, the "carboxyl group" means "-COOH" and/or "-COO⁻ ".

The carboxyl group-containing unsaturated nitrile-conjugated diene-based copolymer (B) is not particularly limited as long as it has at least one carboxyl group in an amount from 0.02 to 2.5 mmol/g in one molecule. The content of this carboxyl group is preferably from 0.04 to 2 mmol/g, and more preferably from 0.08 to 1 mmol/g. When the content is less than 0.02 mmol/g, the ozone resistance of a molded product is liable to be insufficient. On the other hand, when the content is exceeding 2.5 mmol/g, the compression set may be deteriorated.

The carboxyl group-containing unsaturated nitrile-conjugated diene-based copolymer (B) may be a polymer obtained by polymerization or the like using monomers which include an unsaturated nitrile monomer, a conjugated diene-based monomer and a monomer having a carboxyl group, to have structural units that are derived from each monomer and to have a carboxyl group; or may be a polymer obtained using monomers which include a monomer having a carboxyl group on at least one of an unsaturated nitrile monomer and a conjugated diene-based monomer. In the present invention, the former embodiment is preferred.

The carboxyl group-containing unsaturated nitrile-conjugated diene-based copolymer (B) according to the present invention is preferably a carboxyl group-containing unsaturated nitrile-conjugated diene-based copolymer which comprises a structural unit (b1) derived from an unsaturated nitrile monomer in an amount from 15 to 60% by weight, a structural unit (b2) derived from a conjugated diene-based monomer in an amount from 39.8 to 65% by weight, a structural unit (b3) derived from an unsaturated carboxylic acid in an amount from 0.2 to 20% by weight, and a structural unit (b4) derived from other monomer which can be copolymerized with the above monomer in an amount from 0 to 20% by weight based on 100% by weight of total of the structural units (b1), (b2), (b3) and (b4).

Examples of the unsaturated nitrile monomer include a compound exemplified in explanation of the epoxy group-containing acrylic-based rubber (A) as described above. These compounds may be used alone or in combination of two or more.

The structural unit (b1) that constitutes the carboxyl group-containing unsaturated nitrile-conjugated diene-based copolymer (B) is derived from the aforementioned unsaturated nitrile monomer, and the content thereof is from 15 to 60% by weight, more preferably from 20 to 50% by weight, and still more preferably from 35 to 50% by weight based on 100% by weight of total of the structural units. When the content of the structural unit (b1) is less than 15% by weight, the fuel oil resistance of the molded product is liable to be inferior. On the other hand, when the content is exceeding 60% by weight, the hardness of the molded product may be so high that characteristics of a rubber are liable to be lost.

Examples of the conjugated diene-based monomer include 1,3-butadiene, isoprene (2-methyl-1,3-butadiene), 2,3-dimethyl-1,3-butadiene, chloroprene (2-chloro-1,3-butadiene) and the like. These compounds may be used alone or in combination of two or more.

The structural unit (b2) that constitutes the carboxyl group-containing unsaturated nitrile-conjugated diene-based copolymer (B) is derived from the conjugated diene-based monomer, and the content thereof is from 39.8 to 65% by weight, more preferably from 42 to 60% by weight, and still more preferably from 42 to 50% by weight based on 100% by weight of total of the structural units. When the content of the structural unit (b2) is less than 39.8% by weight, the hardness of the molded product may be so high that characteristics of a rubber are liable to be lost. On the other hand, when the content is exceeding 65% by weight, the fuel oil resistance is liable to be inferior.

Examples of the monomer having the carboxyl group include an unsaturated carboxylic acid (involving a monoester of the same) and the like.

Examples of the unsaturated carboxylic acid include an unsaturated carboxylic acid such as acrylic acid, methacrylic acid, crotonic acid, cinnamic acid, maleic acid, maleic anhydride, fumaric acid, itaconic acid, itaconic anhydride and tetraconic acid; an ester having a carboxyl group such as monomethyl maleate, monoethyl maleate, monomethyl itaconate, monoethyl itaconate, phthalic acid monohydroxylene acrylate, mono-2-acryloyloxyethyl hexahydrophthalate, mono-2-methacryloyloxyethyl hexahydrophthalate, monoesters of a nonpolymerizable polycarboxylic acid such as phthalic acid, succinic acid and adipic acid with a hydroxyl group-containing unsaturated compound such as allyl alcohol, methallyl alcohol, 2-hydroxyethyl acrylate and 2-hydroxyethyl methacrylate; and the like. These compounds may be used alone or in combination of two or more.

The structural unit (b3) that constitutes the carboxyl group-containing unsaturated nitrile-conjugated diene-based copolymer (B) is derived from the unsaturated carboxylic acid, and the content thereof is from 0.2 to 20% by weight, more preferably from 0.4 to 10% by weight, and still more preferably from 0.4 to 7% by weight based on 100% by weight of total of the structural units. When the content of the structural unit (b3) is less than 0.2% by weight, the ozone resistance of the molded product is liable to be insufficient. On the other hand, when the content is exceeding 20% by weight, the compression set is liable to be deteriorated.

When the carboxyl group-containing unsaturated nitrile-conjugated diene-based copolymer (B) is consisted of the structural units (b1), (b2) and (b3), a combination of proportion content thereof, (b1)/(b2)/(b3), is from 15 to 60% by weight / from 39.8 to 65% by weight / from 0.2 to 20% by weight, more preferably from 27 to 59.6% by weight / from 40 to 63% by weight / from 0.4 to 10% by weight, and still more preferably from 33 to 54.6% by weight / from 45 to 60% by weight / from 0.4 to 7% by weight based on 100% by weight of total of the structural units.

The carboxyl group-containing unsaturated nitrile-conjugated diene-based copolymer (B) may comprise a structural unit (b4) derived from other monomer that can be copolymerized with the unsaturated nitrile monomer, the conjugated diene-based monomer and the unsaturated carboxylic acid, in addition to the structural units (b1), (b2) and (b3).

Examples of the other monomer include an alkyl (meth)acrylate ester, an aromatic vinyl-based monomer and the like. These compounds may be used alone or in combination of two or more.

Examples of the alkyl (meth)acrylate ester and the aromatic vinyl-based monomer include compounds illustrated above in explanation of the epoxy group-containing acrylic-based rubber (A). These compounds may be used alone or in combination of two or more.

The aromatic vinyl-based monomer may be a compound having a functional group such as an amino group and a hydroxyl group.

Examples of the aromatic vinyl-based monomer having an amino group include N,N-dimethyl-p-aminostyrene, N,N-diethyl-p-aminostyrene, dimethyl(p-vinylbenzyl)amine, diethyl(p-vinylbenzyl)amine, dimethyl(p-vinylphenethyl)amine, diethyl(p-vinylphenethyl)amine, dimethyl(p-vinylbenzyloxymethyl)amine, dimethyl[2-(p-vinylbenzyloxy)ethyl]amine, diethyl(p-vinylbenzyloxymethyl)amine, diethyl[2-(p-vinylbenzyloxy)ethyl]amine, dimethyl(p-vinylphenethyloxymethyl)amine, dimethyl[2-(p-vinylphenethyloxy)ethyl]amine, diethyl(p-vinylphenethyloxymethyl)amine, diethyl[2-(p-vinylphenethyloxy)ethyl]amine, 2-vinylpyridine, 3-vinylpyridine, 4-vinylpyridine and the like.

Examples of the aromatic vinyl-based monomer having a hydroxyl group include o-hydroxystyrene, m-hydroxystyrene, p-hydroxystyrene, o-hydroxy-α-methylstyrene; m-hydroxy-α-methylstyrene, p-hydroxy-α-methylstyrene, p-vinylbenzyl alcohol and the like.

The structural unit (b4) that constitutes the carboxyl group-containing unsaturated nitrile-conjugated diene-based copolymer (B) is derived from the other monomer exemplified above, and the content thereof is from 0 to 20% by weight, more preferably from 0 to 15% by weight, and still more preferably from 0 to 10% by weight based on 100% by weight of total of the structural units. When the content of the structural unit (b4) is exceeding 20% by weight, the ozone resistance of the molded product is liable to be inferior.

Mooney viscosity [ML₁₊₄ (100°C)] of the carboxyl group-containing unsaturated nitrile-conjugated diene-based copolymer (B) is in the range between 20 and 200, and preferably between 40 and 100. When the Mooney viscosity is too low, the strength of the molded product is liable to be lowered, while when it is too high in contrast, the processability during kneading may be inferior.

The process of the production of the carboxyl group-containing unsaturated nitrile-conjugated diene-based copolymer (B) may be performed using a predetermined monomer, in a similar manner to that for the epoxy group-containing acrylic-based rubber (A).

The oil resistant and weather resistant rubber composition of the present invention comprises the epoxy group-containing acrylic-based rubber (A) described above and the carboxyl group-containing unsaturated nitrile-conjugated diene-based copolymer (B) described above.

Their proportion content (A)/(B) is preferably from 30 to 60% by weight / from 40 to 70% by weight, more preferably from 30 to 55% by weight / from 45 to 70% by weight, and still more preferably from 35 to 55% by weight / from 45 to 65% by weight based on 100% by weight of total of them. When the content of the epoxy group-containing acrylic-based rubber (A) is too much, the strength of the molded product is liable to be lowered, while when it is too small in contrast, the ozone resistance is liable to be insufficient.

The oil resistant and weather resistant rubber composition of the present invention may comprise other polymer component in addition to those described above. Examples of the other polymer component include natural rubber, a butadiene rubber, an isoprene rubber, chloroprene rubber, a styrene-butadiene copolymer rubber, a butadiene-isoprene copolymer rubber, a butadiene-styrene-isoprene copolymer rubber, an acrylonitrile-butadiene copolymer rubber, butyl rubber and the like.

The proportion content of the other polymer components is preferably from 0 to 30 parts by weight, more preferably from 0 to 10 parts by weight, and still more preferably from 0 to 5 parts by weight based on 100 parts by weight of total of the epoxy group-containing acrylic-based rubber (A) and the carboxyl group-containing unsaturated nitrile-conjugated diene-based copolymer (B).

The oil resistant and weather resistant rubber composition of the present invention may also comprise an additive such as a reinforcing agent, a filler, a plasticizer, a crosslinking agent, a crosslinking aid (vulcanization accelerator), a processing aid, a softening agent, an antiaging agent, an ultraviolet absorber, a flame retardant, an antibacterial and antifungal agent and a coloring agent.

Examples of the reinforcing agent include carbon black, silica, aluminum hydroxide, alumina and the like. Among them, carbon black is preferred. These reinforcing agents may be used alone or in combination of two or more.

Examples of the carbon black include SAF carbon black, ISAF carbon black, HAF carbon black, FEF carbon black, GPF carbon black, SRF carbon black, FT carbon black, MT carbon black, acetylene carbon black, Ketjen black and the like.

The amount of the reinforcing agent to be compounded is preferably from 5 to 200 parts by weight, more preferably from 10 to 100 parts by weight, and still more preferably from 20 to 80 parts by weight based on 100 parts by weight of total of the polymer in the rubber composition.

Examples of the filler include heavy calcium carbonate, light calcium carbonate, extrafine activated calcium carbonate, special calcium carbonate, basic magnesium carbonate, kaolin clay, fired clay, pyrophyllite clay, silane-treated clay, synthetic calcium silicate, synthetic magnesium silicate, synthetic aluminum silicate, magnesium carbonate, magnesium hydroxide, magnesium oxide, kaolin, sericite, talc, pulvenized talc, wollastonite, zeolite, xonotlite, asbestos, PMF (Processed Mineral Fiber), gohun, sepiolite, potassium titanate, ellestadite, gypsum fiber, glass balloon, silica balloon, hydrotalcite, fly ash balloon, shirasu balloon, carbon-based balloon, barium sulfate, aluminum sulfate, calcium sulfate, molybdenum disulfide and the like. These may be used alone or in combination of two or more.

The amount of the filler to be compounded is preferably from 0 to 200 parts by weight, more preferably from 0 to 100 parts by weight, and still more preferably from 0 to 50 parts by weight based on 100 parts by weight of total of the polymer in the rubber composition.

Examples of the plasticizer include a phthalic acid ester such as dimethyl phthalate, diethyl phthalate, dibutyl phthalate, diisobutyl phthalate, dioctyl phthalate, butyloctyl phthalate, di-(2-ethylhexyl) phthalate, diisooctyl phthalate and diisodecyl phthalate; a fatty acid ester such as dimethyl adipate, diisobutyl adipate, di-(2-ethylhexyl) adipate, diisooctyl adipate, diisodecyl adipate, octyldecyl adipate, di-(2-ethylhexyl) azelate, diisooctyl azelate, diisobutyl azelate, dibutyl sebacate, di-(2-ethylhexyl) sebacate and diisooctyl sebacate; a trimellitic acid ester such as trimellitic acid isodecyl ester, trimellitic acid octyl ester (including trimellitic acid n-octyl ester) and trimellitic acid isononyl ester; di-(2-ethylhexyl) fumarate, diethylene glycol monooleate, glyceryl monoricinolate, trilauryl phosphate, tristearyl phosphate, tri-(2-ethylhexyl) phosphate, epoxidized soybean oil, polyetherester and the like. These plasticizers may be used alone or in combination of two or more.

The amount of the plasticizer to be compounded is preferably from 0 to 80 parts by weight, more preferably from 10 to 60 parts by weight, and still more preferably from 20 to 40 parts by weight based on 100 parts by weight of total of the polymer in the rubber composition.

Examples of the crosslinking agent include sulfur, an organic peroxide and the like, and the sulfur is preferred. Examples of the sulfur include powdery sulfur, precipitated sulfur, colloidal sulfur, surface-treated sulfur, insoluble sulfur and the like.

When the sulfur is used as the crosslinking agent, the amount to be compounded is preferably from 0.05 to 5 parts by weight, more preferably from 0.1 to 3 parts by weight, and still more preferably from 0.2 to 1 part by weight based on 100 parts by weight of total of the polymer in the rubber composition.

In addition, when the sulfur is used as the crosslinking agent, a crosslinking aid (may be also referred to as "vulcanization accelerator") is preferably used in combination. For example, a sulfenamide-based compound such as N-cyclohexyl-2-benzothiazolyl sulfenamide, N-oxydiethylene-2-benzothiazolyl sulfenamide and N,N-diisopropyl-2-benzothiazolyl sulfenamide; a thiazole-based compound such as 2-mercaptobenzo thiazole, 2-(2',4'-dinitrophenyl)mercaptobenzo thiazole, 2-(4'-morpholinodithio)benzo thiazole and dibenzothiazyl disulfide; a guanidine compound such as diphenyl guanidine, diorthotolyl guanidine, diorthonitrile guanidine, orthonitrile biguanide and diphenyl guanidine phthalate; an aldehyde-amine-based or an aldehyde-ammonia-based compound such as an acetaldehyde-aniline reactant, a butylaldehyde-aniline condensate, hexamethylene tetramine and acetaldehyde ammonia; an imidazoline-based compound such as 2-mercapto imidazoline; a thiourea-based compound such as thiocarbanilide, diethylthiourea, dibutylthiourea, trimethylthiourea and diorthotolylthiourea; a thiuram-based compound such as tetramethylthiuram monosulfide, tetramethylthiuram disulfide, tetraethylthiuram disulfide, tetrabutylthiuram disulfide, tetraoctylthiuram disulfide and pentamethylenethiuram tetrasulfide; a dithioic acid salt-based compound such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate; a xanthate-based compound such as zinc dibutylxanthogenate; an inorganic-based zinc compound such as zinc oxide, activated zinc oxide, surface-treated zinc oxide, zinc carbonate, composite zinc oxide and composite activated zinc oxide; and the like may be used alone or in combination of two or more.

Further, examples of the organic peroxide include tert-butyl hydroperoxide, 1,1,3,3-tetramethylbutyl hydroperoxide, p-menthane hydroperoxide, cumene hydroperoxide, diisopropylbenzene hydroperoxide, 2,5-dimethylhexane-2,5-dihydroperoxide, 1,1-di-tert-butylperoxy-3,3,5-trimethylcyclohexane, di-tert-butyl peroxide, tert-butylcumyl peroxide, dicumyl peroxide, 1,1-bis(tert-butylperoxy)cyclododecane, 2,2-bis(tert-butylperoxy)octane, 1,1-di-tert-butylperoxycyclohexane, 2,5-dimethyl-2,5-di-(tert-butylperoxy)hexane, 2,5-dimethyl-2,5-di-(tert-butylperoxy)hexyne-3, 1,3-bis(tert-butylperoxy-isopropyl)benzene, 2,5-dimethyl-2,5-di-(benzoylperoxy)hexane, 1,1-bis (tert-butylperoxy)-3,3,5-trimethylcyclohexane, n-butyl-4,4-bis(tert-butylperoxy)valerate, benzoyl peroxide, m-tolyl peroxide, p-chlorobenzoyl peroxide, 2,4-dichlorobenzoyl peroxide, tert-butylperoxy isobutylate, tert-butylperoxy-2-ethyl hexanoate, tert-butylperoxy benzoate, tert-butylperoxy-isopropyl carbonate, tert-butylperoxyallyl carbonate and the like. These organic peroxides may be used alone or in combination of two or more.

When the organic peroxide is used as the crosslinking agent, the amount to be compounded is preferably from 0.2 to 5 parts by weight, more preferably from 0.3 to 4 parts by weight, and still more preferably from 0.5 to 3 parts by weight based on 100 parts by weight of total of the polymer in the rubber composition.

As the crosslinking agent, for example, an acid anhydride or a carboxylate may be also used for crosslinking of the epoxy group-containing acrylic-based rubber (A). These may be used alone, respectively, or in combination of two or more.

Examples of the acid anhydride include phthalic anhydride, methyltetrahydrophthalic acid, methylhexahydrophthalic anhydride, tetrahydrophthalic anhydride and the like. In addition, the carboxylate may be a salt (metal salt, ammonium salt or the like) of a monocarboxylic acid, or may be a salt (metal salt, ammonium salt or the like) of a dicarboxylic acid. Furthermore, a salt (metal salt, ammonium salt or the like) of a polycarboxylic acid is also usable. Examples of metal element for the metal salt include zinc, magnesium and the like. Therefore, examples of the carboxylate include zinc methacrylate, magnesium methacrylate, zinc dimethacrylate and the like.

Examples of the processing aid include stearic acid, oleic acid, lauryl acid, zinc stearate, commercially available various processing aids and the like. These processing aids may be used alone or in combination of two or more.

The amount of the processing aid to be compounded is preferably from 0 to 20 parts by weight, more preferably from 0.5 to 5 parts by weight, and still more preferably from 1 to 3 parts by weight based on 100 parts by weight of total of the polymer in the rubber composition.

Examples of the softening agent include a petroleum-based softening agent, a vegetable-based softening agent, a factice and the like. These softening agents may be used alone or in combination of two or more.

Examples of the petroleum-based softening agent include an aromatic-based, a naphthene-based, a paraffin-based softening agents and the like. Examples of the vegetable-based softening agent include castor oil, cottonseed oil, linseed oil, rapeseed oil, soybean oil, palm oil, coconut oil, peanut oil, Japan wax and the like. Examples of the factice include a brown factice, a white factice, a semitranslucent factice and the like.

The amount of the softening agent to be compounded is preferably from 0 to 50 parts by weight, more preferably from 0 to 30 parts by weight, and still more preferably from 0 to 10 parts by weight based on 100 parts by weight of total of the polymer in the rubber composition.

Examples of the antiaging agent include a naphthyl amine-based, a diphenylamine-based, a p-phenylenediamine-based, a quinoline-based, a hydroquinone derivative-based, a monophenol-based, a bisphenol-based, a triphenol-based, a polyphenol-based (which has 4 or more phenol groups), a thiobisphenol-based, a hindered phenol-based, a phosphorous acid ester-based, an imidazole-based, a dithiocarbamate nickel salt-based, a phosphoric acid-based antiaging agents and the like. These antiaging agents may be used alone or in combination of two or more.

The amount of the antiaging agent to be compounded is preferably from 0 to 10 parts by weight, more preferably from 0 to 7 parts by weight, and still more preferably from 0 to 5 parts by weight based on 100 parts by weight of total of the polymer in the rubber composition.

Examples of the ultraviolet absorber include benzophenones, benzotriazoles, salicylic acid esters, metal complexes and the like. These ultraviolet absorbers may be used alone or in combination of two or more.

The amount of the ultraviolet absorber to be compounded is preferably from 0 to 10 parts by weight, more preferably from 0 to 7 parts by weight, and still more preferably from 0 to 5 parts by weight based on 100 parts by weight of total of the polymer in the rubber composition.

The oil resistant and weather resistant rubber composition of the present invention can be produced, for example, as described below.

First, the epoxy group-containing acrylic-based rubber (A), the carboxyl group-containing unsaturated nitrile-conjugated diene-based copolymer (B), the reinforcing agent such as carbon black, and other compounding agent other than the crosslinking agent are kneaded using a kneader such as Banbury mixer at a temperature in the range between 70 and 180°C. Thereafter, the kneaded product is cooled, and therein are compounded the crosslinking agent such as sulfur, the crosslinking aid (crosslinking accelerator and the like) and the like using a Banbury mixer, a mixing roll or the like. Thus, the rubber composition can be obtained by crosslinking at a temperature in the range between 130 and 200°C. When a molded product is formed directly after kneading, die molding, extrusion molding, injection molding or the like may be applied to the rubber composition at the same temperature employed above.

The epoxy group-containing acrylic-based rubber (A) and the carboxyl group-containing unsaturated nitrile-conjugated diene-based copolymer (B) may be admixed in each solid state following coagulation in the step. Alternatively, they may be admixed in the step using a complex (composite rubber), which comprises the epoxy group-containing acrylic-based rubber (A) and the carboxyl group-containing unsaturated nitrile-conjugated diene-based copolymer (B), obtained by mixing each emulsified liquid (latex) prior to give the solid state at a predetermined ratio followed by coagulating the polymer component from the mixture in a similar process to that described above.

### 2. Molded product

The molded product of the present invention is formed using the oil resistant and weather resistant rubber composition described above. Molding method includes die molding, extrusion molding, injection molding and the like. Examples of the molded product include a hose such as an oil cooler hose, an air duct hose, a power steering hose, a control hose, an inter cooler hose, a torcon hose, an oil return hose and a heat resistant hose; tubes such as a bicycle tube, a rubber duct and a rubber tubing for use in physical and chemical science; a seal such as a bearing seal, a valve stem seal and various kinds of oil seals; an O-ring; a gland packing; a gasket; a diaphragm; a rubber plate; a belt; an oil level gauge; a hose masking; a cover such as a heat insulator for ductwork; a roll and the like. Particularly, a hose and a seal are suitable.

The hose according to the present invention is generally obtained by extrusion molding, injection molding and the like. The wall thickness, the shape of the section of the hose and the like are not particularly limited.

The wall thickness of the hose depends on the use and the like. In general, the wall thickness is in the range from 1 to 30 mm. In addition, the shape of the section of the hose can be a circular, an elliptic, a square shapes or the like.

The hose according to the present invention may have a single-layered or a multi-layered structure. In the case of a multi-layered structure, it is preferable that an inmost layer is consisted of the oil resistant and weather resistant rubber composition of the present invention.

The seal according to the present invention is generally obtained by die molding, injection molding and the like. The form of the seal depends on the use and the like, and is not particularly limited. The seal according to the present invention leads to a composite seal combined with other parts.

### EXAMPLES

The present invention is specifically explained below by way of Examples. The present invention is not any how limited to these Examples. Further, "%" and "part" referred to in the Examples is on weight basis unless otherwise specifically described.

### 1. Acrylic-based rubber (A)

### Synthesis Example 1

A monomer mixture including 70 parts of ethyl acrylate, 5 parts of glycidyl methacrylate and 25 parts of acrylonitrile, 4 parts of sodium lauryl sulfate, 0.2 part of potassium persulfate and 200 parts of water were charged into a nitrogen-purged stainless reaction vessel to conduct a polymerization at 50°C. When the polymerization conversion reached to approximately 100%, 0.5 part of N,N-diethylhydroxylamine was added to the reaction system to terminate the copolymerization reaction (reaction time period: 15 hours). Next, a 0.25% aqueous calcium chloride solution was added to a latex containing the reaction product to coagulate the copolymer rubber. After sufficiently washing the coagulated product with water, it was dried at about 90°C for 3 hours to obtain an epoxy group-containing acrylic-based rubber (A-1) having a Mooney viscosity [ML₁₊₄ (100°C)] of 70 (see, Table 1). The "structural unit" in Table 1 represents the content of the structural units that constitute the resulting epoxy group-containing acrylic-based rubber (A-1). The same is applied to in the followings.

In addition, the content of acrylonitrile unit, and the contents of an epoxy group and a carboxyl group were measured according to the following process.

### (1) Content of acrylonitrile unit

It was calculated from the nitrogen content by an element analysis.

### (2) Content of an epoxy group

The sample was dissolved in a predetermined amount of methyl ethyl ketone, followed by a reaction with an excessive amount of hydrochloric acid. The content was determined by a neutralization titration of the residual hydrochloric acid.

### (3) Determination of a carboxyl group

After dissolving the sample in methyl ethyl ketone, the content was determined by a direct neutralization titration.

### Synthesis Example 2

A monomer mixture including 65 parts of ethyl acrylate, 5 parts of glycidyl methacrylate, 5 parts of dihydrodicyclopentadienyl oxyethyl acrylate (DCPOEA) and 25 parts of acrylonitrile, 4 parts of sodium lauryl sulfate, 0.2 part of potassium persulfate and 200 parts of water were charged into a nitrogen-purged stainless reaction vessel to conduct a polymerization at 50°C. When the polymerization conversion reached to approximately 100%, 0.5 part of N,N-diethylhydroxylamine was added to the reaction system to terminate the copolymerization reaction (reaction time period: 15 hours). Next, a 0.25% aqueous calcium chloride solution was added to a latex containing the reaction product to coagulate the copolymer rubber. After sufficiently washing the coagulated product with water, it was dried at about 90°C for 3 hours to obtain an epoxy group-containing acrylic-based rubber (A-2) having a Mooney viscosity [ML₁₊₄ (100°C)] of 72 (see, Table 1).

### Synthesis Example 3

A monomer mixture including 95 parts of ethyl acrylate and 5 parts of glycidyl methacrylate, 4 parts of sodium lauryl sulfate, 0.2 part of potassium persulfate and 200 parts of water were charged into a nitrogen-purged stainless reaction vessel to conduct a polymerization at 50°C. When the polymerization conversion reached to approximately 100%, 0.5 part of N,N-diethylhydroxylamine was added to the reaction system to terminate the copolymerization reaction (reaction time period: 15 hours). Next, a 0.25% aqueous calcium chloride solution was added to a latex containing the reaction product to coagulate the copolymer rubber. After sufficiently washing the coagulated product with water, it was dried at about 90°C for 3 hours to obtain an epoxy group-containing acrylic-based rubber (A-3) having a Mooney viscosity [ML₁₊₄ (100°C)] of 60 (see, Table 1).

### Synthesis Example 4 (for Comparison)

A monomer mixture including 70 parts of ethyl acrylate, 5 parts of dihydrodicyclopentadienyl oxyethyl acrylate (DCPOEA) and 25 parts of acrylonitrile, 4 parts of sodium lauryl sulfate, 0.2 part of potassium persulfate and 200 parts of water were charged into a nitrogen-purged stainless reaction vessel to conduct a polymerization at 50°C. When the polymerization conversion reached to approximately 100%, 0.5 part of N,N-diethylhydroxylamine was added to the reaction system to terminate the copolymerization reaction (reaction time period: 15 hours). Next, a 0.25% aqueous calcium chloride solution was added to a latex containing the reaction product to coagulate the copolymer rubber. After sufficiently washing the coagulated product with water, it was dried at about 90°C for 3 hours to obtain an epoxy group-containing acrylic-based rubber (A-4) having a Mooney viscosity [ML₁₊₄ (100°C)]of 70 (see, Table 1).

### 2. Unsaturated nitrile-conjugated diene-based copolymer (B)

### Synthesis Example 5

A monomer mixture including 45 parts of acrylonitrile, 52 parts of butadiene and 3 parts of methacrylic acid, 4 parts of sodium lauryl sulfate, 0.2 part of potassium persulfate and 200 parts of water were charged into a nitrogen-purged stainless reaction vessel to conduct a polymerization at 40°C. When the polymerization conversion reached to approximately 80%, 0.5 part of N,N-diethylhydroxylamine was added to the reaction system to terminate the copolymerization reaction (reaction time period: 8 hours). Next, a 0.25% aqueous calcium chloride solution was added to a latex containing the reaction product to coagulate the copolymer rubber. After sufficiently washing the coagulated product with water, it was dried at about 90°C for 3 hours to obtain an unsaturated nitrile-conjugated diene copolymer (B1) having a Mooney viscosity [ML₁₊₄ (100°C)] of 80 and an acrylonitrile unit content of 41% (see, Table 1).

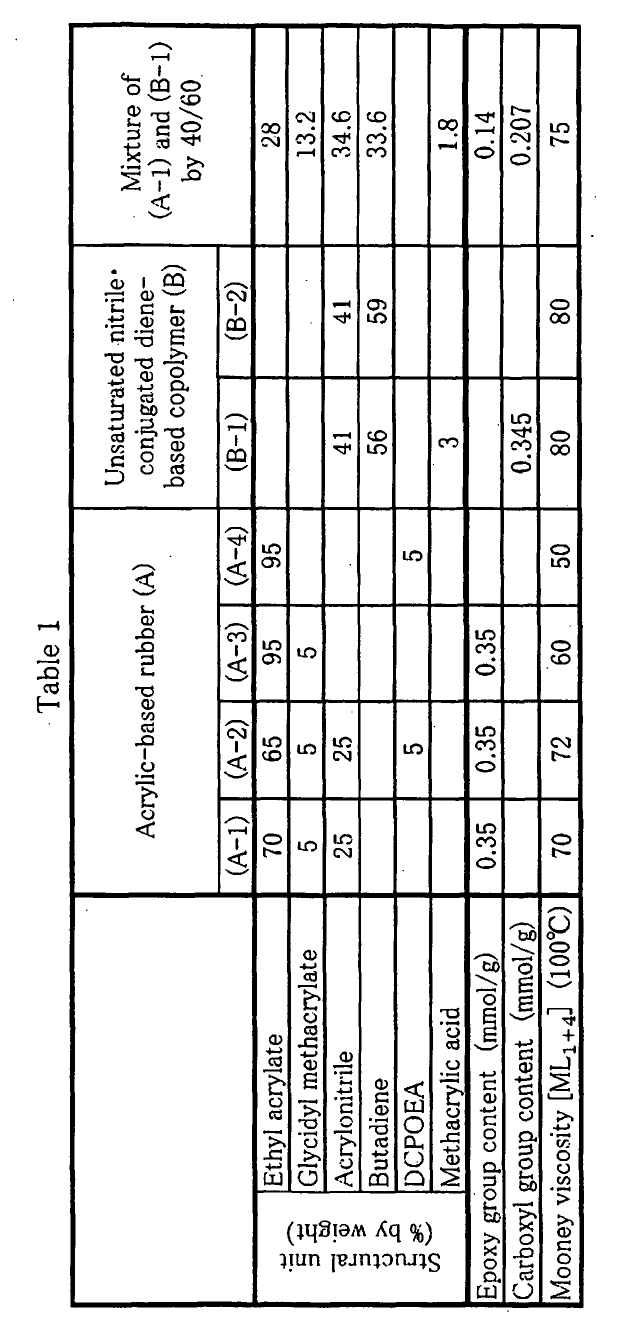

### 3. Production and evaluation of rubber composition

### Example 1

40 parts of the acrylic-based rubber (A-1) and 60 parts of an unsaturated nitrile-conjugated diene-based copolymer (B-1) which had been obtained as described above, 1.0 part of stearic acid (Trade name: "Lunac S-30", manufactured by KAO CORPORATION), 60 parts of carbon black (Trade name: "Seast 116", manufactured by TOKAI CARBON CO., LTD.), 20 parts of an adipic acid ether ester-based plasticizer (Trade name: "RS107", manufactured by ASAHI DENKA CO., LTD.), 5.0 parts of zinc oxide (Trade name: "Zinc oxide 2", manufactured by SEIDO CHEMICAL CO., LTD.), 0.5 part of sulfur (Trade name: "powdery sulfur", manufactured by TSURUMI CHEMICAL CO., LTD.), 2.0 parts of tetraoctylthiuram disulfide (Trade name: "NOCCELER TOT-N", manufactured by OUCHISHINKO CHEMICAL INDUSTRIAL CO., LTD.) as a vulcanization accelerator (I), 1.0 part of N-cyclohexyl-2-benzothiazolyl sulfenamide (Trade name: "NOCCELER CZ", manufactured by OUCHISHINKO CHEMICAL INDUSTRIAL CO., LTD.) as a vulcanization accelerator (II), and 0.5 part of 2-mercaptobenzo thiazole (Trade name: "NOCCELER M", manufactured by OUCHISHINKO CHEMICAL INDUSTRIAL CO., LTD.) as a vulcanization accelerator (III) were kneaded using a roll to prepare a composition. After that, a vulcanized rubber sheet was produced by a press vulcanization of the rubber composition at 170°C for 20 minutes, and the physical properties were evaluated. The results are shown in Table 2. Evaluation of the vulcanized rubber was performed according to the following process.

### (1) Tensile breaking strength

It was measured according to JIS-K6251.

### (2) Hardness:

It was measured according to JIS-K6253 as an index of the flexibility.

### (3) Compression set

The value after 25% of compression at 100°C, for 70 hours was measured according to JIS-K6262.

### (4) Static ozone deterioration test condition

It was measured according to JIS-K6259. The employed specimen had a dumbbell shape, No.1, according to JIS-K6251. A vulcanized rubber sheet having a thickness of 2 mm was stamped out to give the dumbbell shape, No.1. The specimen was extended by 50% and held for 24 hours. After that, the specimen was placed into an ozone tester (50 pphm, 40°C), and a generation of the crack was identified every 24 hours.

### (5) Fuel oil resistance

After dipping the specimen in Fuel C test oil at 40°C, for 48 hours, changing rates of strength Sc(T_{B}), extension Sc(E_{B}), hardness CH and volume ΔV were measured according to JIS-K6258.

### Example 2

A composition was prepared similarly to Example 1 except that the acrylic-based rubber (A-2) was used instead of the acrylic-based rubber (A-1). Then a vulcanized rubber sheet was produced, and evaluation of physical properties was conducted. The results are shown in Table 2.

### Example 3

A composition was prepared similarly to Example 1 except that the acrylic-based rubber (A-3) was used instead of the acrylic-based rubber (A-1). Then a vulcanized rubber sheet was produced, and evaluation of physical properties was conducted. The results are shown in Table 2.

### Example 4

First, each latex containing each reaction product (copolymer rubber) obtained in Synthesis Example 1 and Synthesis Example 5 described above was blended to give the solid proportion of each copolymer rubber being 40/60, and thereto was added an aqueous calcium chloride solution (0.25%) to coagulate the copolymer rubber. After sufficiently washing the coagulated product with water, it was dried at about 90°C for 3 hours to obtain a composite rubber having a Mooney viscosity [ML₁₊₄ (100°C)] of 76. The contents of the structural units that constitute this composite rubber are shown in Table 1.

Subsequently, a composition was prepared similarly to Example 1 except that 100 parts of the resulting composite rubber was used instead of the acrylic-based rubber (A-1) and the unsaturated nitrile-conjugated diene-based copolymer (B-1). Then a vulcanized rubber sheet was produced, and evaluation of physical properties was conducted. The results are shown in Table 2.

### Example 5

A composition was prepared similarly to Example 1 except that 1.0 part of phthalic anhydride (Trade name: "SCONOC 5", manufactured by OUCHISHINKO CHEMICAL INDUSTRIAL CO., LTD.) was further compounded prior to kneading using a roll. Then a vulcanized rubber sheet was produced, and evaluation of physical properties was conducted. The results are shown in Table 2.

### Example 6

A composition was prepared similarly to Example 1 except that 2.0 parts of zinc methacrylate (Trade name: "ACTOR ZMA", manufactured by KAWAGUCHI CHEMICAL INDUSTRY CO., LTD.) was further compounded prior to kneading using a roll. Then a vulcanized rubber sheet was produced, and evaluation of physical properties was conducted. The results are shown in Table 2.

### Comparative Example 1

A composition was prepared similarly to Example 3 except that the unsaturated nitrile-conjugated diene-based copolymer (B-2) (Trade name: "NBR N220SH", manufactured by JSR CORPORATION) which does not have a carboxyl group shown in Table 1 was used instead of the unsaturated nitrile-conjugated diene-based copolymer (B-1). Then a vulcanized rubber sheet was produced, and evaluation of physical properties was conducted. The results are shown in Table 2.

### Comparative Example 2

A composition was prepared similarly to Example 1 except that the acrylic-based rubber (A-4) was used instead of the acrylic-based rubber (A-1). Then a vulcanized rubber sheet was produced, and evaluation of physical properties was conducted. The results are shown in Table 2.

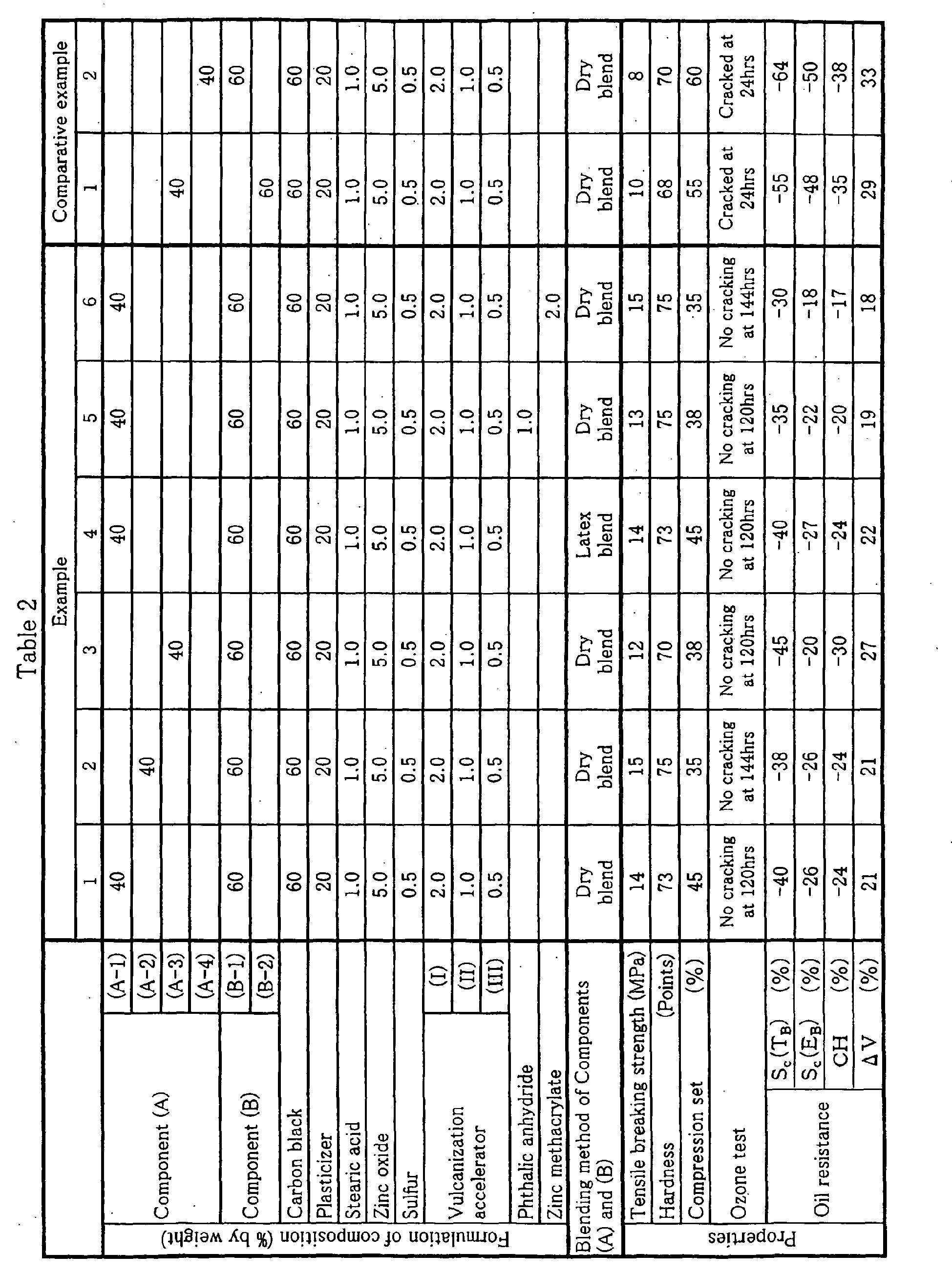

As is clear from Table 2, Comparative Example 1, which is an example where an unsaturated nitrile-conjugated diene-based copolymer having no carboxyl groups was used, exhibited a low tensile breaking strength, a hardness of 68 points, i.e., less than 70, and a compression set of 55%, i.e., larger than 50%. Also, the ozone resistance and the fuel oil resistance were not satisfactory. Comparative Example 2, which is an example where an acrylic rubber having no epoxy groups was used, exhibited a still lower tensile breaking strength of 8 MPa, and a still higher compression set of 60%. Also, the ozone resistance and the fuel oil resistance were not satisfactory.

On the other hand, Examples 1 to 6 exhibited well balanced each performance. The ozone resistance and the fuel oil resistance were excellent in particular. Accordingly, the rubber composition of the present invention is suitable for a variety of hoses for vehicles, a variety of hoses for engines, a seal and the like. Additionally, since the rubber composition is halogen-free, any hazardous gas or the like is not exhausted upon incineration after abolition, as in the case of polyvinyl chloride and the like.

An object of the present invention is to provide an oil resistant and weather resistant rubber composition which leads to a molded product (rubber product) that has a sufficiently high strength and hardness, and low compression set, and that is excellent in ozone resistance; and a molded product such as a hose and a seal using the same. The oil resistant and weather resistant rubber composition of the present invention comprises an epoxy group-containing acrylic-based rubber having an epoxy group in an amount from 0.01 to 1.5 mmol/g, and a carboxyl group-containing unsaturated nitrile-conjugated diene-based copolymer having a carboxyl group in an amount from 0.02 to 2.5 mmol/g. The rubber composition may further comprise a reinforcing agent, a plasticizer, a crosslinking agent and the like.

## Claims

1. An oil resistant and weather resistant rubber composition which comprises (A) an epoxy group-containing acrylic-based rubber having an epoxy group in an amount from 0.01 to 1.5 mmol/g, and (B) a carboxyl group-containing unsaturated nitrile-conjugated diene-based copolymer having a carboxyl group in an amount from 0.02 to 2.5 mmol/g.

2. The oil resistant and weather resistant rubber composition according to Claim 1, wherein said epoxy group-containing acrylic-based rubber (A) comprises a structural unit (a1) derived from at least one monomer selected from the group consisting of an acrylic acid alkyl ester and an acrylic acid alkoxyalkyl ester in an amount from 20 to 99.8% by weight, a structural unit (a2) which is derived from an unsaturated epoxy monomer and has an epoxy group in an amount from 0.2 to 20% by weight, a structural unit (a3) derived from an unsaturated nitrile monomer in an amount from 0 to 60% by weight, and a structural unit (a4) derived from other monomer which can be copolymerized with said monomer in an amount from 0 to 20% by weight based on 100% by weight of total of said structural units (a1), (a2), (a3) and (a4).

3. The oil resistant and weather resistant rubber composition according to Claim 2, wherein said structural unit (a4) is a structural unit derived from at least one monomer selected from the group consisting of a non-conjugated cyclic polyene and a compound represented by the following general formula (1) and is comprised in an amount from 0.1 to 20% by weight, and wherein X¹ represents hydrogen atom or methyl group, and n is an integer number from 0 to 10.

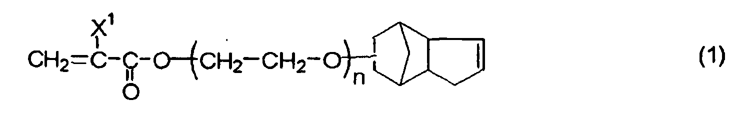

4. The oil resistant and weather resistant rubber composition according to Claim 2 or 3, wherein Mooney viscosity [ML₁₊₄ (100°C)] of said epoxy group-containing acrylic-based rubber (A) is in the range between 10 and 200.

5. The oil resistant and weather resistant rubber composition according to any one of claims 1 to 4, wherein said carboxyl group-containing unsaturated nitrile-conjugated diene-based copolymer (B) comprises a structural unit (b1) derived from an unsaturated nitrile monomer in an amount from 15 to 60% by weight, a structural unit (b2) derived from a conjugated diene-based monomer in an amount from 39.8 to 65% by weight, a structural unit (b3) derived from an unsaturated carboxylic acid in an amount from 0.2 to 20% by weight, and a structural unit (b4) derived from other monomer which can be copolymerized with said monomer in an amount from 0 to 20% by weight based on 100% by weight of total of said structural units (b1), (b2), (b3) and (b4).

6. The oil resistant and weather resistant rubber composition according to Claim 5, wherein Mooney viscosity [ML₁₊₄ (100°C)] of said unsaturated nitrile-conjugated diene-based copolymer (B) is in the range between 20 and 200.

7. The oil resistant and weather resistant rubber composition according to any one of claims 1 to 6, wherein contents of said epoxy group-containing acrylic-based rubber (A) and said unsaturated nitrile-conjugated diene-based copolymer (B) are from 30 to 60% by weight and from 40 to 70% by weight respectively based on 100% by weight of total of said rubber (A) and said copolymer (B).

8. The oil resistant and weather resistant rubber composition according to any one of claims 1 to 7, further comprising a reinforcing agent, a plasticizer and a crosslinking agent.

9. The oil resistant and weather resistant rubber composition according to Claim 8, further comprising at least one crosslinking agent selected from the group consisting of an acid anhydride and a carboxylate.

10. A molded product formed using said oil resistant and weather resistant rubber composition according to any one of claims 1 to 9.

11. The molded product according to Claim 10, wherein said molded product is a hose or a seal.

## Patentansprüche

1. Ölbeständige und wetterbeständige Kautschukzusammensetzung, die (A) einen Epoxygruppe-enthaltenden, auf Acryl basierenden Kautschuk mit einer Epoxygruppe in einer Menge von 0,01 bis 1,5 mmol/g, und (B) ein auf einem Carboxylgruppe-enthaltenden ungesättigten Nitril und einem konjugierten Dien basierendes Copolymer mit einer Carboxylgruppe in einer Menge von 0,02 bis 2,5 mmol/g umfasst.

2. Ölbeständige und wetterbeständige Kautschukzusammensetzung nach Anspruch 1, wobei der Epoxygruppeenthaltende, auf Acryl basierende Kautschuk (A) umfasst eine strukturelle Einheit (a1), die von mindestens einem Monomer, gewählt von der Gruppe bestehend aus einem Acrylsäurealkylester und einem Acrylsäurealkoxyalkylester, abgeleitet ist, in einer Menge von 20 bis 99,8 Gew.-%, eine strukturelle Einheit (a2), die von einem ungesättigten Epoxymonomer abgeleitet ist und eine Epoxygruppe hat, in einer Menge von 0,2 bis 20 Gew.-%, eine strukturelle Einheit (a3), die von einem ungesättigten Nitril-Monomer abgeleitet ist, in einer Menge von 0 bis 60 Gew.-%, und eine strukturelle Einheit (a4), die von einem anderen Monomer abgeleitet ist, das mit dem Monomer copolymerisiert werden kann, in einer Menge von 0 bis 20 Gew.-% basierend auf 100 Gew.-% der Summe der strukturellen Einheiten (a1), (a2), (a3) und (a4).

3. Ölbeständige und wetterbeständige Kautschukzusammensetzung nach Anspruch 2, wobei die strukturelle Einheit (a4) eine strukturelle Einheit ist, die von mindestens einem Monomer abgeleitet ist, gewählt von der Gruppe bestehend aus einem nicht-konjugierten cyclischen Polyen und einer Verbindung, die durch die folgende allgemeine Formel (1) dargestellt ist, und in einer Menge von 0,1 bis 20 Gew.-% enthalten ist, und worin X¹ ein Wasserstoffatom oder eine Methylgruppe darstellt, und n eine ganze Zahl von 0 bis 10 ist.

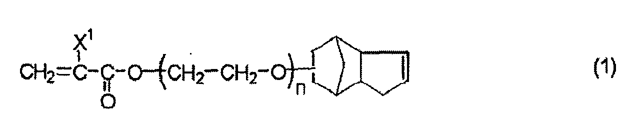

4. Ölbeständige und wetterbeständige Kautschukzusammensetzung nach Anspruch 2 oder 3, wobei die Mooney-Viskosität [ML₁₊₄ (100°C)] des Epoxygruppe-enthaltenden, auf Acryl basierenden Kautschuks (A) im Bereich zwischen 10 und 200 ist.

5. Ölbeständige und wetterbeständige Kautschukzusammensetzung nach einem der Ansprüche 1 bis 4, wobei das auf einem Carboxylgruppe-enthaltenden ungesättigten Nitril und einem konjugierten Dien basierende Copolymer (B) umfasst eine strukturelle Einheit (b1), die von einem ungesättigten Nitril-Monomer abgeleitet ist, in einer Menge von 15 bis 60 Gew.-%, eine strukturelle Einheit (b2), die von einem Monomer auf Basis eines konjugierten Diens abgeleitet ist, in einer Menge von 39,8 bis 65 Gew.-%, eine strukturelle Einheit (b3), die von einer ungesättigten Carbonsäure abgeleitet ist, in einer Menge von 0,2 bis 20 Gew.-%, und eine strukturelle Einheit (b4), die von dem anderen Monomer abgeleitet ist, das mit dem Monomer copolymerisiert werden kann, in einer Menge von 0 bis 20 Gew.-%, basierend auf 100 Gew.-% der Summe der strukturellen Einheiten (b1), (b2), (b3) und (b4).

6. Ölbeständige und wetterbeständige Kautschukzusammensetzung nach Anspruch 5, wobei die Mooney-Viskosität [ML₁₊₄ (100°C)] des auf einem ungesättigten Nitril und einem konjugierten Dien basierenden Copolymers (B) im Bereich zwischen 20 und 200 ist.

7. Ölbeständige und wetterbeständige Kautschukzusammensetzung nach einem der Ansprüche 1 bis 6, wobei die Anteile des Epoxygruppe-enthaltenden, auf Acryl basierenden Kautschuks (A) und des auf einem ungesättigten Nitril und einem konjugierten Dien basierenden Copolymers (B) jeweils von 30 bis 60 Gew.-% und von 40 bis 70 Gew.-% sind, auf Grundlage von 100 Gew.-% der Summe des Kautschuks (A) und des Copolymers (B).

8. Ölbeständige und wetterbeständige Kautschukzusammensetzung nach einem der Ansprüche 1 bis 7, die weiter einen Verstärkungsstoff, einen Weichmacher und ein Vernetzungsmittel umfasst.

9. Ölbeständige und wetterbeständige Kautschukzusammensetzung nach Anspruch 8, die weiter mindestens ein Vernetzungsmittel umfasst, das von der Gruppe bestehend aus einem Säureanhydrid und einem Carboxylat gewählt ist.

10. Geformtes Produkt, erzeugt unter Verwendung der ölbeständigen und wetterbeständigen Kautschukzusammensetzung nach einem der Ansprüche 1 bis 9.

11. Das geformte Produkt nach Anspruch 10, wobei das geformte Produkt ein Schlauch oder eine Dichtung ist.

## Revendications

1. Composition de caoutchouc résistant à l'huile et résistant aux intempéries qui comprend (A) un caoutchouc à base acrylique contenant un groupe époxy comprenant un groupe époxy dans une quantité de 0,01 à 1,5 mmol/g, et (B) un copolymère à base de nitrile insaturé - diène conjugué contenant un groupe carboxyle comprenant un groupe carboxyle dans une quantité de 0,02 à 2,5 mmol/g.

2. Composition de caoutchouc résistant à l'huile et résistant aux intempéries selon la revendication 1, dans laquelle ledit caoutchouc à base acrylique contenant un groupe époxy (A) comprend un motif structurel (a1) dérivé d'au moins un monomère choisi dans le groupe constitué par un ester alkylique d'acide acrylique et un ester alcoxyalkylique d'acide acrylique dans une quantité de 20 à 99,8 % en poids, un motif structurel (a2) qui est dérivé d'un monomère époxy insaturé et qui comprend un groupe époxy dans une quantité de 0,2 à 20 % en poids, un motif structurel (a3) dérivé d'un monomère nitrile insaturé dans une quantité de 0 à 60 % en poids, et un motif structurel (a4) dérivé d'un autre monomère qui peut être copolymérisé avec le monomère dans une quantité de 0 à 20 % en poids, pour 100 % en poids du total des motifs structuraux (a1), (a2), (a3) et (a4).

3. Composition de caoutchouc résistant à l'huile et résistant aux intempéries selon la revendication 2, dans laquelle ledit motif structurel (a4) est un motif structurel dérivé d'au moins un monomère choisi dans le groupe constitué par un polyène cyclique non conjugué et un composé représenté par la formule générale (1) suivante et qui est présent dans une quantité de 0,1 à 20 % en poids, et dans laquelle X¹ représente un atome d'hydrogène ou un groupe méthyle, et n est un nombre entier de 0 à 10.

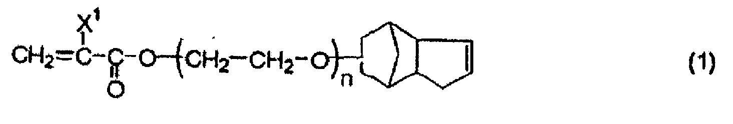

4. Composition de caoutchouc résistant à l'huile et résistant aux intempéries selon la revendication 2 ou 3, dans laquelle la viscosité Mooney [ML₁₊₄ (100°C)] dudit caoutchouc à base acrylique contenant un groupe époxy (A) est dans la plage comprise entre 10 et 200.

5. Composition de caoutchouc résistant à l'huile et résistant aux intempéries selon l'une quelconque des revendications 1 à 4, dans laquelle ledit copolymère à base de nitrile insaturé - diène conjugué contenant un groupe carboxyle comprenant un groupe carboxyle (B) comprend un motif structurel (b1) dérivé d'un monomère nitrile insaturé dans une quantité de 15 à 60 % en poids, un motif structurel (b2) dérivé d'un monomère à base d'un diène conjugué dans une quantité de 39,8 à 65 % en poids, un motif structurel (b3) dérivé d'un acide carboxylique insaturé dans une quantité de 0,2 à 20 % en poids, et un motif structurel (b4) dérivé d'un autre monomère qui peut être copolymérisé avec le monomère dans une quantité de 0 à 20 % en poids, pour 100 % en poids du total des motifs structuraux (b1), (b2), (b3) et (b4).

6. Composition de caoutchouc résistant à l'huile et résistant aux intempéries selon la revendication 5, dans laquelle la viscosité Mooney [ML₁₊₄ (100°C)] dudit copolymère à base de nitrile insaturé - diène conjugué (B) est dans la plage comprise entre 20 et 200.

7. Composition de caoutchouc résistant à l'huile et résistant aux intempéries selon l'une quelconque des revendications 1 à 6, dans laquelle les teneurs dudit caoutchouc à base acrylique contenant un groupe époxy (A) et dudit copolymère à base de nitrile insaturé - diène conjugué (B) sont respectivement de 30 à 60 % en poids et de 40 à 70 % en poids, pour 100% en poids du total du caoutchouc (A) et du copolymère (B).

8. Composition de caoutchouc résistant à l'huile et résistant aux intempéries selon l'une quelconque des revendications 1 à 7, comprenant en outre un agent de renfort, un plastifiant et un agent de réticulation.

9. Composition de caoutchouc résistant à l'huile et résistant aux intempéries selon la revendication 8, comprenant en outre au moins un agent de réticulation choisi dans le groupe constitué par un anhydride d'acide et un carboxylate.

10. Produit moulé formé à l'aide de ladite composition de caoutchouc résistant à l'huile et résistant aux intempéries selon l'une quelconque des revendications 1 à 9.

11. Produit moulé selon la revendication 10, dans lequel ledit produit moulé est un tuyau ou un joint.
